# EUROPEAN PATENT SPECIFICATION

(11) **EP 3 670 456 B1**
(45) Date of publication and mention of the grant of the patent: **25.10.2023**
(21) Application number: 19217645.1
(22) Date of filing: 18.12.2019
(51) Int. Cl.: C02F 1/38, C02F 5/00, C02F 1/28

(54) **APPARATUS FOR TREATING WATER**
VORRICHTUNG ZUR BEHANDLUNG VOM WASSER
DISPOSITIF DE TRAITEMENT D'EAU

(30) Priority: 19.12.2018 IT 201800020203
(43) Date of publication of application: 24.06.2020
(73) Proprietor: Edenwell S.r.l., 31012 Cappella Maggiore (TV) (IT)
(72) Inventor: PIANCA, Michele, 31029 Vittorio Veneto (TV) (IT)
(74) Representative: Dall'Olio, Christian

(56) References cited:
- EP-A1- 3 085 670
- KR-A- 20060 103 744
- US-A1- 2014 069 510

## Description

The present invention relates to the technical sector concerning treatment devices and systems for water treatment.

In particular, the invention relates to a water treatment device for domestic, civil and industrial uses.

The water flowing in distribution systems (water distribution network) contains additives with disinfectant and antibacterial properties for removing undesired chemical substances or biological contaminants.

However the additives are not able to remove or reduce other types of suspended substances such as calcium salts.

On temperature variation and owing to pressure, calcium salts suspended in water tend to precipitate in the form of calcite.

Calcite is very abrasive and tends to form very cohesive limestone structures, which lead to the onset of encrustations that, as is known, damage pipes, plant systems, apparatus using water from the water distribution network.

Further, in particular, the presence of calcite makes the water less suitable for human consumption, as it is less energetic and vitalising.

A treatment method is known for hydrodynamic activation of water by creating a vortication in the water flow pathway with enables a reduction in the surface tension thereof, increasing the velocity, and dissolving the bonds of the calcium salts, thus reducing calcite formation.

The hydrodynamic activation treatment further enables not losing the vital and energetic properties essential for living creatures.

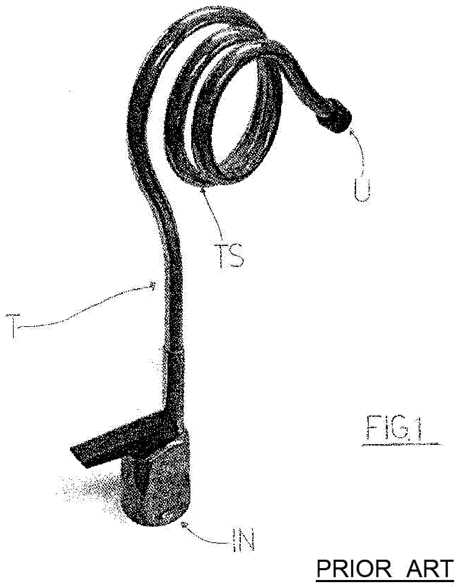

A prior art device for water treatment by hydrodynamic activation is illustrated in figure 1.

This device comprises a conduit (T) which has a water inlet (I), connectable to the water distribution network, and a water outlet (U).

The conduit (T) is conformed in such a way as to comprise a part (TS) winding in a spiral so that the water, in its travel from the inlet (I) towards the outlet (U) inside the conduit, follows a vortex pathway and thus is subject to a hydrodynamic activation treatment.

A device of this type, however, has some drawbacks.

Firstly, it is not particularly efficient in preventing the formation of calcite, as the water outlet is arranged tangentially to the spiral-wound part, i.e. perpendicularly to the axis of the spiral-wound part.

Secondly, over time limestone encrustations form inside the conduit, causing loss of efficiency in the vortex pathway and making replacement necessary, as it is not possible to carry out cleaning of the inside of the portion making up the spiral pathway.

Document KR20060103744A discloses a water treatment device according to the preamble of claim 1. Other examples of devices for treating water are given by the documents US2014/069510 A1 and EP3085670 A1.

The aim of the present invention is therefore to provide a novel water treatment device by hydrodynamic activation able to obviate the drawbacks of the prior art.

In particular, an aim of the present invention is to provide a water treatment device which is effective in reducing the presence of calcite and, at the same time, which improves the quality of the water, conserving and bringing out the vital and energetic properties thereof that are essential for living creatures. The above-cited aims are obtained by a water treatment device according to claim 1.

Further characteristics and advantageous aspects of the water treatment device of the present invention are set down in the various claims dependent on claim 1.

A further aim of the invention is to provide a filter and water treatment system comprising the treatment device of the invention.

A preferred embodiment of the water treatment device of the present invention is described in the following with reference to the appended tables of drawings, in which:
- figure 1 schematically illustrates a perspective view of a water treatment device according to the prior art;

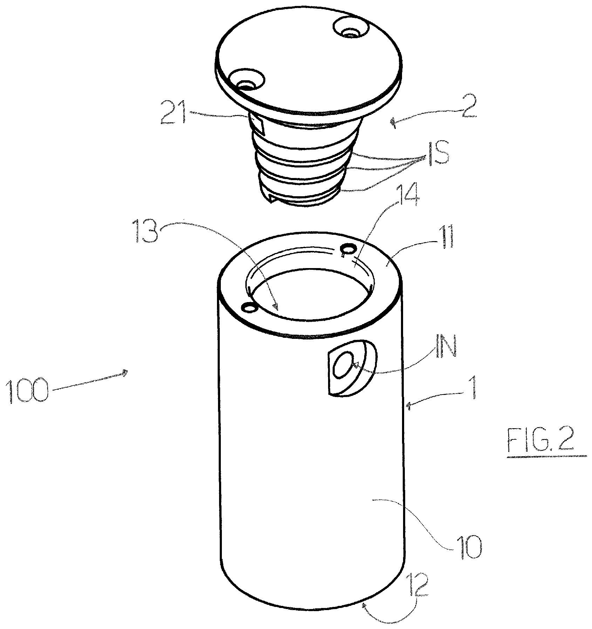

- figure 2 is a schematic perspective view of the straightening device of the water treatment device of the invention, in an exploded view to illustrate the components that make it up in detail;

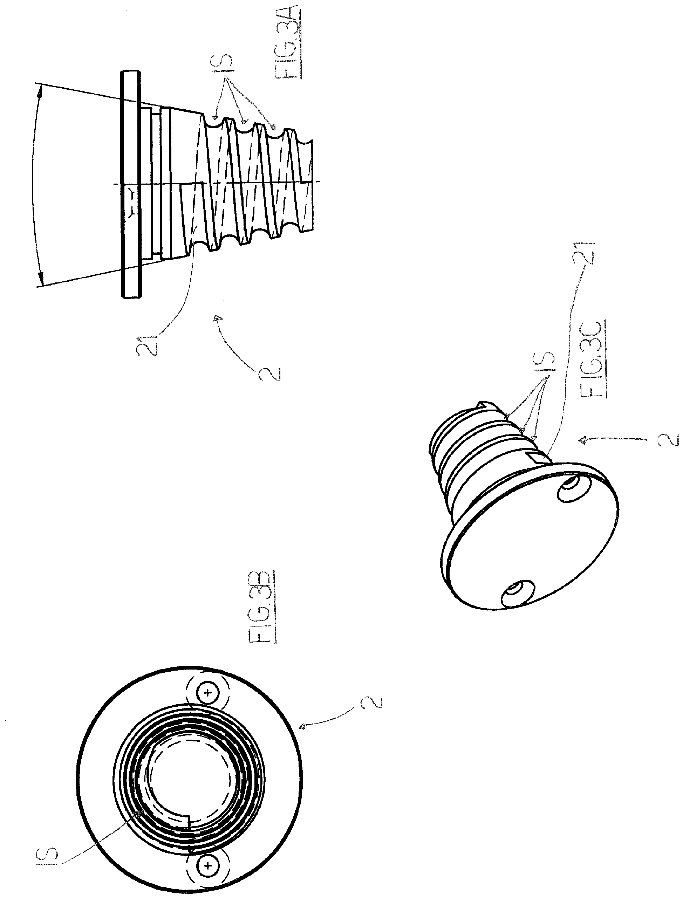

- figures 3A, 3B and 3C illustrate, in relative frontal, plan and perspective views, a first significant component of the treatment device;

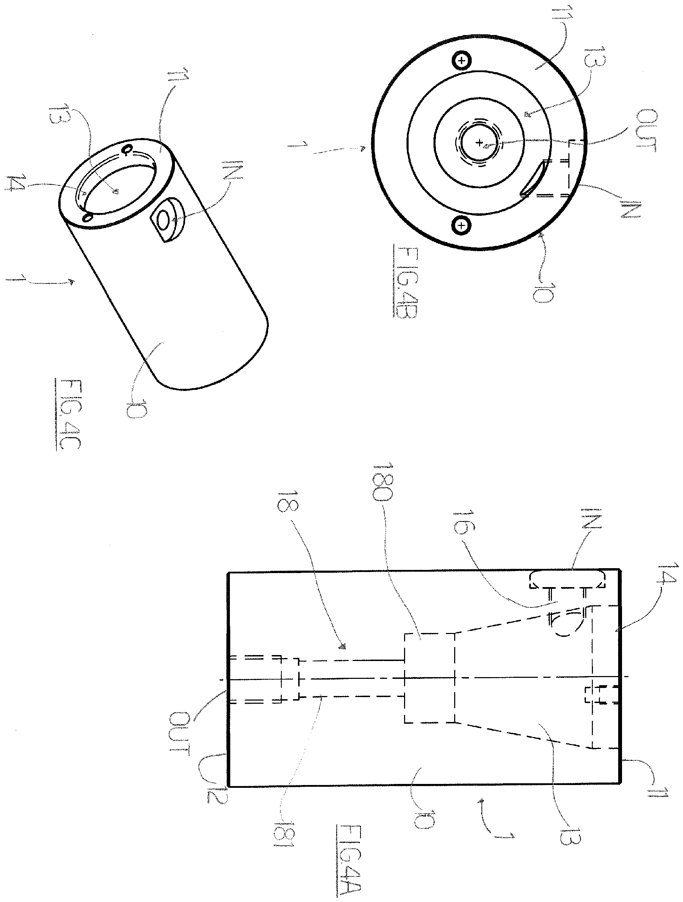

- figures 4A, 4B and 4C illustrate, in relative frontal, plan and perspective views, a second significant component of the treatment device;
- figure 5 illustrates, in a schematic representation, a filtration and water treatment system of the water coming from the water distribution network which uses the treatment device of the invention.

With reference to the accompanying tables of drawings, reference number (100) denotes the water treatment device of the present invention, in its entirety.

The water treatment device (100) comprises an external body (1) and an internal body (2) which are conformed in particular as specified in the following, and which are assemblable to one another to enable the treatment device (100) to carry out its water treatment function by means of hydrodynamic activation.

The external body (1) has a shape which is such as to comprise a lateral surface (10) and two heads (11, 12) opposite one another, and comprises a water inlet (IN), for inlet of a water flow in arrival from a water distribution network, situated on the lateral surface (10) in proximity of a first head (11) and a water outlet (OUT) at a second head (12).

The external body (1) is further conformed so as to comprise an axial housing (13), accessible from the first head (11), to couplingly receive the internal body (2), the axial housing (13) being in communication with the water inlet (IN) and with the water outlet (OUT),

In turn, the internal body (2) is conformed so as to comprise a complementary shape to the axial housing (13) of the external body (1) so as to be insertable in the axial housing (13) through a hole (14) in the first head (11) of the external body (1).

The peculiarities of the treatment device (100) of the invention consist in the fact that the walls of the axial housing (13) and the walls of the internal body (2) are reciprocally conformed in such a way that, when the internal body (2) is inserted in the axial housing (13), to identify between them a spiral pathway (S) for the water flow between the water inlet (IN) and the water outlet (OUT) so that the water flow in arrival from the water distribution network, entering through the water inlet (IN), is forced to follow a vortex pathway, and wherein the water outlet (OUT) is realised on the second head (12) in a position that is coaxial to the axis of the spiral pathway (S) of the water flow.

Owing to the particular reciprocal arrangement between the spiral pathway (S), defined by the internal body (2) and the axial housing (13) of the external body (1), which constrains the water flow to follow a vortex pathway as it flows towards the outlet, and the water outlet (OUT), which is coaxial to the axis of the spiral pathway (S), with the treatment device (100) of the invention it is possible to dissolve, in the most effective manner, the bonds of the calcium salts with respect to the prior art device.

The greater effectiveness in dissolving the bonds of the calcium salts brings the possibility of having a greater incidence in the reduction of the formation of calcite and therefore obtaining a high-quality treated water with respect to the prior art device, and bringing out the vital and energetic properties essential for living creatures.

Further, if necessary, the treatment device is easy to clean, as it will be sufficient to extract the internal body from the axial housing of the external body in order to proceed with the cleaning operations.

Further advantageous characteristics of the treatment device of the present invention are set down in the following.

The internal body (2) is conformed in such a way as to have a truncoconical shape and to have a spiral-shaped incision (IS) on the lateral surface of the truncoconical shape, while, in a like way, the axial housing (13) of the external body (1) is conformed so as to have a truncoconical shape that is complementary to the truncoconical shape of the internal body (2).

When the internal body (2) is inserted in and coupled in the axial housing (13) of the external body (1), the spiral-shaped incision (IS) defines, between the walls of the internal body (2) and the walls of the axial housing (13), the spiral pathway (S) for the water flow between the water inlet (IN) and the water outlet (OUT) having an axis that is coaxial to the axial housing (13) of the external body (1) and coaxial to the water outlet (OUT).

The external body (1) has a connection (16) between the water inlet (IN) and the axial housing (13) while the spiral-shaped incision (IS) is realised on the walls of the internal body (2) so that, when the internal body (2) is inserted in and coupled with the axial housing (13) of the external body (1), it has an initial portion (21) of spiral (30) at the position of the connection (16).

The external body (1) has a connecting conduit (18) between the internal end of the axial housing (13) and the water outlet (OUT) which is coaxial with the axis of the spiral-shaped incision (IS) and therefore coaxial to the water outlet (OUT).

In particular, the connecting conduit (18) comprises a first part (180), communicating with the internal end of the axial housing (13), and a second part (181) for connection to the water outlet (OUT), the first part (180) having a greater diameter than the second part (181).

The external body (1) has a cylindrical shape with the two heads (11, 12) having a circumferential shape.

In a preferred embodiment, the external body (1), as mentioned, can be made in a cylindrical shape with the two heads having a circumferential shape, and with the axial housing having a truncoconical shape to receive the internal body in turn having a truncoconical shape.

In this case, for example, the external body (1) can be made in such a way as to have a height comprised between 108 and 112 mm, in particular a height of 110 mm, with the two heads having a diameter of between 58 and 62 mm, in particular 60 mm.

The hole on the first head, which makes the truncoconical axial housing accessible, can have a diameter comprised between 38 and 42 mm, in particular 40 mm.

The truncoconical axial housing can have a depth comprised between 44 and 48 mm, in particular 46 mm and a conicity angle of about 20°-24°, in particular 22°.

The first part (180) of the connecting conduit (18) between the axial housing (13) and the water outlet (OUT) can have a diameter comprised between 23 and 27 mm, in particular 25 mm, while the second part (181) of the connecting conduit (18) can have a diameter comprised between 8 and 12 mm, in particular 10 mm.

The internal body (2) can be realised in such a way that the portion that inserts in the axial housing (13) of the external body (1) has a length comprised between 43 and 47 mm, in particular a length of about 45 mm, and can have a conicity angle corresponding to the angle of the truncoconical axial housing.

Further, the internal body (2) is realised in such a way that the spiral-shaped incision (IS) thereon comprises four spiral steps, each having a width of about 8 mm.

Laboratory testing has been carried out to verify the effectiveness of the treatment device of the invention.

The laboratory tests were carried out on a sample of untreated water (sample water) and on a sample of treated water, i.e. treated with the treatment device of the invention.

The two tests on the two samples of water were carried out using x-ray diffraction analysis (XRD) for identification of the crystalline phases in accordance with UNI EN 13925-2:2006.

For the sample of untreated water (sample water), the graph included on the following page was obtained, which identifies the crystalline phases relative to the presence of Aragonite (CaCO₃) and Calcite (CaCO₃).

Graph of untreated water sample (sample water)

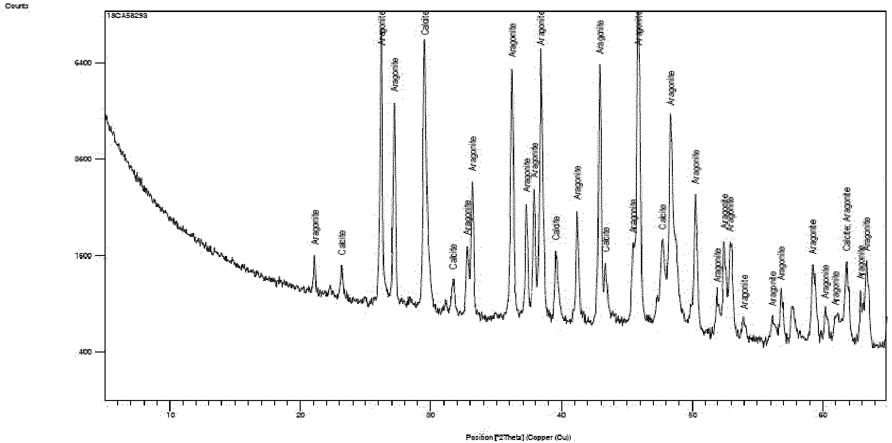

The presence of Aragonite was detected, as a main component, and Calcite, as a component present in a middle-ranking quantity.

On the other hand, for the sample of treated water, treated using the treatment device of the invention, the following graph was obtained, which identifies the crystalline phases relative to the presence of Aragonite (CaCO₃) and Calcite (CaCO₃).

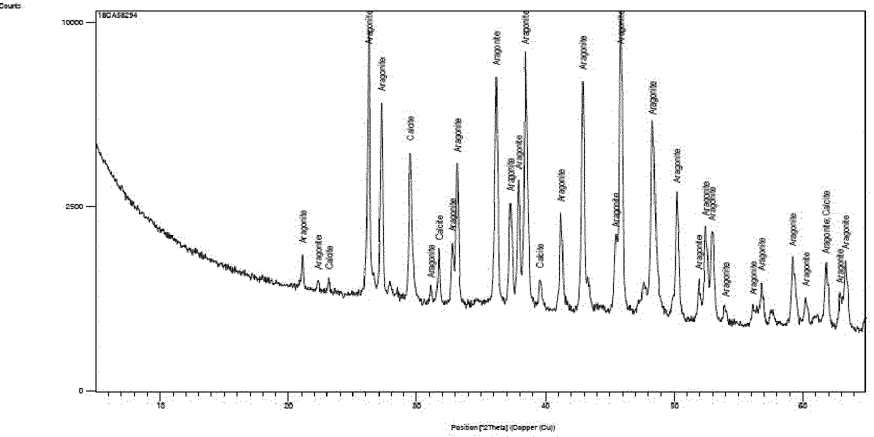

The presence of Aragonite was detected, as a main component, and Calcite, as a component present in a small quantity.

When comparing the two graphs the following representation is obtained (the red graph relates to the sample of untreated water while the blue graph relates to the sample of treated water with the treatment device of the invention).

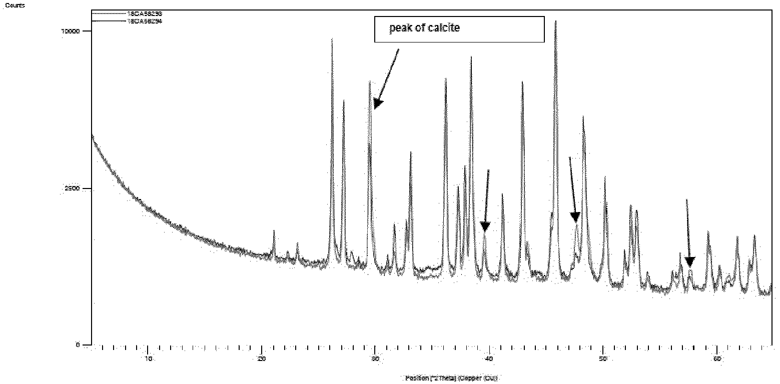

The diffraction analyses detect an increase in the aragonite/calcite ratio in the sample of treated water with respect to the sample of untreated water (sample water), as evidenced by the superposing of the two graphs and indicated by the arrows.

This means that thanks to the treatment device of the invention it is more effectively possible to dissolve the bonds of the calcium salts and obtain an efficient reduction of the presence of calcite and an increase in the presence of aragonite, which is a calcium salt that does not deposit and does not give rise to encrustation phenomena, and produces a qualitatively better water.

Further tests were also carried out according to the sensitive crystallisation method.

The laboratory tests were carried out on a sample water (untreated) and on a sample of treated water ("vorticised"), i.e. treated with the treatment device of the invention.

The crystallisation tests were carried out following the standard which requires: flat glass discs of diameter 9 cm, with 0.17 g of CuCl₂.2H₂O, aqueous solution, total 6.00 ml by repetition.

Four repetitions per sample were carried out per sample, with a temperature T of 30°C and relative moisture of 60%, with a controlled crystallisation environment with immobility and horizontality of the rest planes.

The following images were obtained.

### Untreated water sample (sample water)

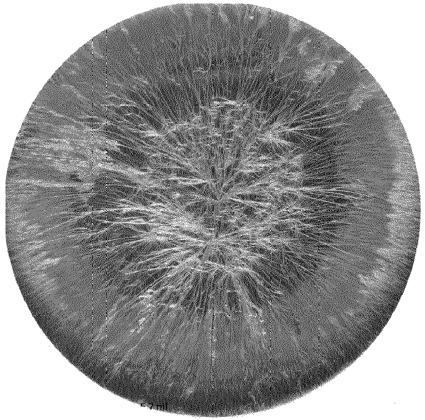

### Treated water sample (vorticised water)

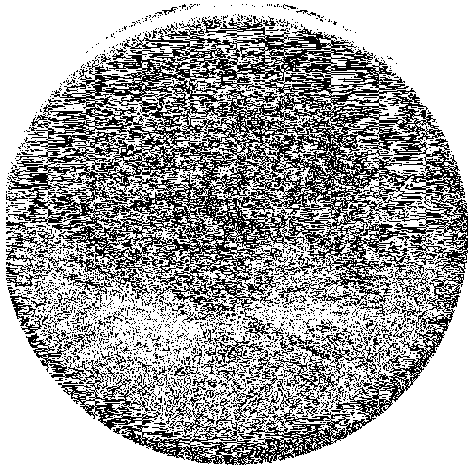

In this new sensitive crystallisation test the images obtained with the treated water also show an obvious and considerable difference both in terms of the order, symmetry, "harmony", and in terms of the intensity and precision clearly in favour of the "vorticised" sample (treated with the treatment device of the invention).

While the "sample water" generates a compressed crystallisation profile, limited to the central zone, tending to or effectively chaotic, the "vorticised" water (water treated with the treatment device of the invention) considerably elongates and expands the crystallisation field, lengthening and reinforcing the radii and multiplying the secondary lateral ramification.

In the image of the vorticised water, the whole profile seems to be decidedly more ordered, organised about a more clearly defined and evident fulcrum.

The part covered by the limestone deposit (external area) is also partly reduced which also appears more finely subdivided and distributed, showing that the treatment has also influenced the physical structure of the residue.

In conclusion, the test showed an evident and positive effect of the vorticisation treatment obtained using the treatment device of the invention, which determines a true and proper qualitative leap in the treated water.

The present invention further comprises a water treatment and filter system (S), for filtration and treatment of a water flow coming from the water distribution network.

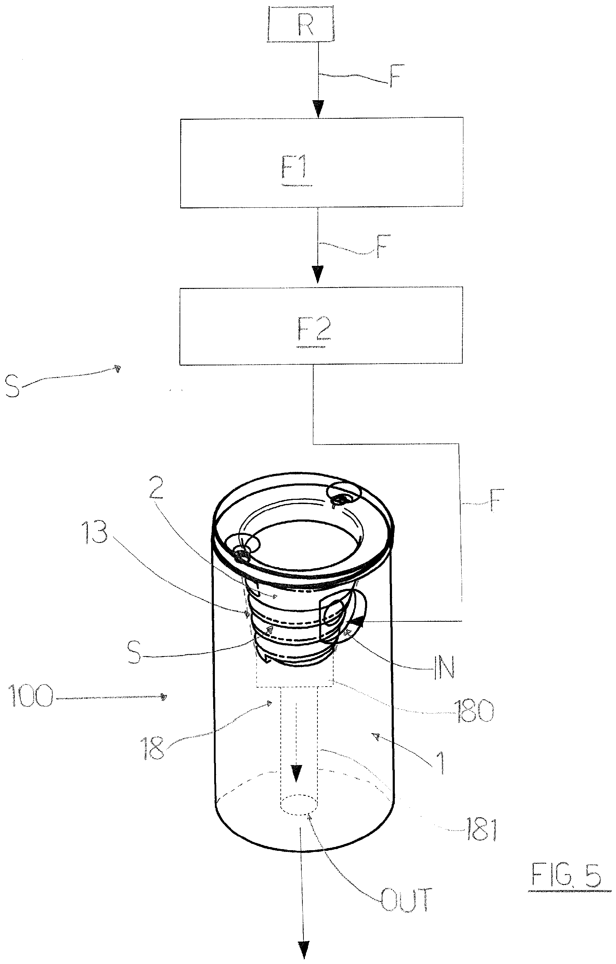

The system (S), as schematically illustrated in figure 5, comprises:
a first carbon and silver filter (F1),
a second ceramic and activated carbon filter (F2) located downstream of the first carbon and silver filter (F1),
and a treatment device (100) as described in the foregoing, wherein the treatment device (100) is located downstream of the second ceramic and activated carbon filter (F2) and arranged vertically with the first head (11) up and the second head (12), which includes the water outlet (OUT), down.

In particular, a first filter (F1) of pressed and synthesised activated charcoal is used, impregnated with silver.

With this first filter, chemical polluters and dissolved substances can be retained, such as for example chlorine. Further, the porosity of the filter stops bacteria, while the silver prevents proliferation thereof, maintaining the system disinfected.

The second filter (F2) is a micro-porous and activated charcoal ceramic-earth filter.

The ceramic filter emulates the natural filtration process which in nature is carried out by rocks as the water passes.

The ceramic external shell of the filter carries out a microfiltration of the pathogenic organisms (bacteria, parasites, cysts), sediments and impurities.

Inside the ceramic shell there is an anti-bacterial formulation containing silver to prevent microbiological growth inside the ceramic filter.

Lastly, the presence of a block of compacted activated charcoal enables eliminating bad odours of chlorine and derivatives thereof, chemical residues and products.

The presence of this second filter further enables a reduction of the presence of heavy metals.

In the system, therefore, the water filtered in this way is injected into the treatment device as described above, for its hydrodynamic activation treatment which acts on the bonds of the calcium salts, enabling more effective dissolving thereof with a reduction of the presence of calcite and with an increase in the presence of aragonite, and enabling purified water of high quality to be obtained, with vital and energetic properties that are essential for living creatures.

## Claims

1. A water treatment device (100) comprising an external body (1) and an internal body (2) assemblable to one another, wherein:
the external body (1) has a shape which is such as to comprise a lateral surface (10) and two heads (11, 12) opposite one another, and comprises a water inlet (IN), for inlet of a water flow in arrival from a water distribution network, situated on the lateral surface (10) in proximity of a first head (11) and a water outlet (OUT) at a second head (12), the external body (1) is conformed so as to comprise an axial housing (13), accessible from the first head (11), to couplingly receive the internal body (2), the axial housing (13) being in communication with the water inlet (IN) and with the water outlet (OUT),
the internal body (2) is conformed so as to comprise a complementary shape to the axial housing (13) of the external body (1) so as to be insertable in the axial housing (13) through a hole (14) in the first head (11) of the external body (1),
wherein the walls of the axial housing (13) and the walls of the internal body (2) are reciprocally conformed in such a way that, when the internal body (2) is inserted in the axial housing (13), to identify between them a spiral pathway (S) for the water flow between the water inlet (IN) and the water outlet (OUT) so that the water flow in arrival from the water distribution network, entering through the water inlet (IN), is forced to follow a vortex pathway,
**characterized in that** the water outlet (OUT) is realised on the second head (12) in a position that is coaxial to the axis of the spiral pathway (S) of the water flow, **in that** the internal body (2) is conformed in such a way as to have a truncoconical shape and to have a spiral-shaped incision (IS) on the lateral surface of the truncoconical shape and wherein the axial housing (13) of the external body (1) is conformed so as to have a truncoconical shape that is complementary to the truncoconical shape of the internal body (2), and wherein, when the internal body (2) is inserted in and coupled in the axial housing (13) of the external body (1), the spiral-shaped incision (IS) defines, between the walls of the internal body (2) and the walls of the axial housing (13), the spiral pathway (S) for the water flow between the water inlet (IN) and the water outlet (OUT) having an axis that is coaxial to the axial housing (13) of the external body (1) and coaxial to the water outlet (OUT), and **in that** the external body (1) has a connection (16) between the water inlet (IN) and the axial housing (13) and wherein the spiral-shaped incision (IS) is realised on the walls of the internal body (2) so that, when the internal body (2) is inserted in and coupled with the axial housing (13) of the external body (1), it has an initial portion (21) of spiral (30) at the position of the connection (16).

2. The treatment device (100) of claim 1, wherein the external body (1) has a connecting conduit (18) between the internal end of the axial housing (13) and the water outlet (OUT) which is coaxial with the axis of the spiral-shaped incision (IS) and therefore coaxial to the water outlet (OUT).

3. The treatment device (100) of claim 2, wherein the connecting conduit (18) comprises a first part (180), communicating with the internal end of the axial housing (13), and a second part (181) for connection to the water outlet (OUT), wherein the first part (180) has a greater diameter than the second part (181).

4. The treatment device (100) of any one of the preceding claims, wherein the external body (1) has a cylindrical shape with the two heads (11, 12) having a circumferential shape.

5. A water treatment and filter system (S), for purification and treatment of a water flow (F) coming from the water distribution network (R), comprising:
a first carbon and silver filter (F1),
a second ceramic and activated carbon filter (F2) located downstream of the first carbon and silver filter (F1),
and a treatment device (100) according to any one of the preceding claims,
wherein the treatment device (100) is located downstream of the second ceramic and activated carbon filter (F2) and arranged vertically with the first head (11) up and the second head (12), which includes the water outlet (OUT), down.

## Patentansprüche

1. Wasserbehandlungsvorrichtung (100), umfassend einen äußeren Körper (1) und einen inneren Körper (2), die zusammengebaut werden können, wobei:
der äußere Körper (1) eine Form aufweist, die eine seitliche Oberfläche (10) und zwei einander gegenüberliegende Kopfteile (11, 12) umfasst, und einen Wassereinlass (IN) zum Einlassen einer von einem Wasserversorgungsnetz kommenden Wasserströmung umfasst, der auf der seitlichen Oberfläche (10) in der Nähe eines ersten Kopfteils (11) angeordnet ist, und einen Wasserauslass (OUT) an einem zweiten Kopfteil (12) umfasst, wobei der äußere Körper (1) derart beschaffen ist, dass er ein Axialgehäuse (13) umfasst, das von dem ersten Kopfteil (11) aus zugänglich ist, um den inneren Körper (2) koppelnd aufzunehmen, wobei das Axialgehäuse (13) in Verbindung mit dem Wassereinlass (IN) und mit dem Wasserauslass (OUT) steht,
der innere Körper (2) derart beschaffen ist, dass er eine zu dem Axialgehäuse (13) des äußeren Körpers (1) komplementäre Form aufweist, um durch ein Loch (14) in dem ersten Kopfteil (11) des äußeren Körpers (1) in das Axialgehäuse (13) eingeführt werden zu können,
wobei die Wände des Axialgehäuses (13) und die Wände des inneren Körpers (2) derart relativ zueinander gestaltet sind, dass, wenn der innere Körper (2) in das Axialgehäuse (13) eingeführt ist, zwischen den beiden ein spiralförmiger Pfad (S) für die Wasserströmung zwischen dem Wassereinlass (IN) und dem Wasserauslass (OUT) gebildet wird, so dass die von dem Wasserversorgungsnetz kommende Wasserströmung, bei ihrem Eintritt durch den Wassereinlass (IN) gezwungen wird, einem wirbelförmigen Pfad zu folgen, **dadurch gekennzeichnet, dass** der Wasserauslass (OUT) auf dem zweiten Kopfteil (12) in einer solchen Position verwirklicht ist, dass er koaxial zu der Achse des spiralförmigen Pfades (S) der Wasserströmung ist, und dadurch, dass der innere Körper (2) derart beschaffen ist, dass er eine kegelstumpfförmige Gestalt und einen spiralförmigen Einschnitt (IS) auf der seitlichen Oberfläche dieser kegelstumpfförmigen Gestalt aufweist, und wobei das Axialgehäuse (13) des äußeren Körpers (1) derart beschaffen ist, dass es eine kegelstumpfförmige Gestalt aufweist, die komplementär zu der kegelstumpfförmigen Gestalt des inneren Körpers (2) ist, und wobei, wenn der innere Körper (2) in das Axialgehäuse (13) des äußeren Körpers (1) eingeführt und mit diesem gekoppelt ist, der spiralförmige Einschnitt (IS), zwischen den Wänden des inneren Körpers (2) und den Wänden des Axialgehäuses (13), den spiralförmigen Pfad (S) für die Wasserströmung zwischen dem Wassereinlass (IN) und dem Wasserauslass (OUT) definiert, der eine Achse aufweist, die koaxial zu dem Axialgehäuse (13) des äußeren Körpers (1) und koaxial zu dem Wasserauslass (OUT) ist, und dadurch, dass der äußere Körper (1) eine Verbindung (16) zwischen dem Wassereinlass (IN) und dem Axialgehäuse (13) aufweist, und wobei der spiralförmige Einschnitt (IS) auf den Wänden des inneren Körpers (2) so verwirklicht ist, dass, wenn der innere Körper (2) in das Axialgehäuse (13) des äußeren Körpers (1) eingeführt und mit diesem gekoppelt ist, er einen Anfangsabschnitt (21) einer Spirale (30) an der Position der Verbindung (16) aufweist.

2. Behandlungsvorrichtung (100) nach Anspruch 1, wobei der äußere Körper (1) eine Verbindungsleitung (18) zwischen dem inneren Ende des Axialgehäuses (13) und dem Wasserauslass (OUT) aufweist, die koaxial zu der Achse des spiralförmigen Einschnitts (IS) und daher koaxial zu dem Wasserauslass (OUT) ist.

3. Behandlungsvorrichtung (100) nach Anspruch 2, wobei die Verbindungsleitung (18) einen ersten Teil (180) umfasst, der mit dem inneren Ende des Axialgehäuses (13) in Verbindung steht, und einen zweiten Teil (181) zur Verbindung mit dem Wasserauslass (OUT) umfasst, wobei der erste Teil (180) einen größeren Durchmesser als der zweite Teil (181) aufweist.

4. Behandlungsvorrichtung (100) nach einem der vorhergehenden Ansprüche, wobei der äußere Körper (1) eine zylindrische Form aufweist und die zwei Kopfteile (11, 12) eine Umfangsform aufweisen.

5. Wasserbehandlungs- und Filtersystem (S) zur Aufbereitung und Behandlung einer vom Wasserversorgungsnetz (R) kommenden Wasserströmung (F), umfassend:
einen ersten Kohle- und Silberfilter (F1),
einen zweiten Keramik- und Aktiv-Kohlefilter (F2), der stromabwärts nach dem ersten Kohle- und Silberfilter (F1) angeordnet ist,
und eine Behandlungsvorrichtung (100) nach einem der vorhergehenden Ansprüche, wobei die Behandlungsvorrichtung (100) stromabwärts nach dem zweiten Keramik- und Aktiv-Kohlefilter (F2) angeordnet und vertikal ausgerichtet ist, mit dem ersten Kopfteil (11) nach oben und dem zweiten Kopfteil (12), das den Wasserauslass (OUT) umfasst, nach unten.

## Revendications

1. Un dispositif de traitement d'eau (100) comprenant un corps extérieur (1) et un corps intérieur (2) pouvant être assemblés l'un à l'autre, dans lequel :
le corps extérieur (1) a une forme de nature à comprendre une surface latérale (10) et deux têtes (11, 12) opposées l'une de l'autre, et comprend une entrée d'eau (IN), pour l'entrée d'un flux d'eau provenant d'un réseau de distribution d'eau, située sur la surface latérale (10) à proximité d'une première tête (11) et une sortie d'eau (OUT) au niveau d'une deuxième tête (12), le corps extérieur (1) est conformé de manière à comprendre un logement axial (13), accessible depuis la première tête (11), pour recevoir en accouplement le corps intérieur (2), le logement axial (13) étant en communication avec l'entrée d'eau (IN) et avec la sortie d'eau (OUT),
le corps intérieur (2) est conformé de manière à comprendre une forme complémentaire au logement axial (13) du corps extérieur (1) de manière à pouvoir être inséré dans le logement axial (13) à travers un trou (14) dans la première tête (11) du corps extérieur (1),
dans lequel les parois du logement axial (13) et les parois du corps intérieur (2) sont réciproquement conformées de façon telle que, lorsque le corps intérieur (2) est inséré dans le logement axial (13), elles identifient entre elles un parcours en spirale (S) pour le flux d'eau entre l'entrée d'eau (IN) et la sortie d'eau (OUT) de manière à ce que le flux d'eau provenant du réseau de distribution d'eau, en entrant par l'entrée d'eau (IN), soit forcé de suivre un parcours tourbillonnaire, **caractérisé en ce que** la sortie d'eau (OUT) est réalisée sur la deuxième tête (12) dans une position qui est coaxiale à l'axe du parcours en spirale (S) du flux d'eau, **en ce que** le corps intérieur (2) est conformé de manière à avoir une forme troncoconique et à avoir une incision en forme de spirale (IS) sur la surface latérale de la forme troncoconique et dans lequel le logement axial (13) du corps extérieur (1) est conformé de manière à avoir une forme troncoconique qui est complémentaire à la forme troncoconique du corps intérieur (2), et dans lequel, lorsque le corps intérieur (2) est inséré et accouplé dans le logement axial (13) du corps extérieur (1), l'incision en forme de spirale (IS) définit, entre les parois du corps intérieur (2) et les parois du logement axial (13), le parcours en spirale (S) pour le flux d'eau entre l'entrée d'eau (IN) et la sortie d'eau (OUT) ayant un axe qui est coaxial au logement axial (13) du corps extérieur (1) et coaxial à la sortie d'eau (OUT), et **en ce que** le corps extérieur (1) a un raccord (16) entre l'entrée d'eau (IN) et le logement axial (13) et dans lequel l'incision en forme de spirale (IS) est réalisée sur les parois du corps intérieur (2) de manière à ce que, lorsque le corps intérieur (2) est inséré dans et accouplé avec le logement axial (13) du corps extérieur (1), elle ait une portion initiale (21) de spirale (30) au niveau de la position du raccord (16).

2. Le dispositif de traitement (100) selon la revendication 1, dans lequel le corps extérieur (1) a un conduit de raccordement (18) entre l'extrémité intérieure du logement axial (13) et la sortie d'eau (OUT) qui est coaxial à l'axe de l'incision en forme de spirale (IS) et donc coaxial à la sortie d'eau (OUT).

3. Le dispositif de traitement (100) selon la revendication 2, dans lequel le conduit de raccordement (18) comprend une première partie (180), communiquant avec l'extrémité intérieure du logement axial (13), et une deuxième partie (181) pour le raccordement à la sortie d'eau (OUT), dans lequel la première partie (180) a un plus grand diamètre que la deuxième partie (181).

4. Le dispositif de traitement (100) selon l'une quelconque des revendications précédentes, dans lequel le corps extérieur (1) a une forme cylindrique avec les deux têtes (11, 12) qui ont une forme circonférentielle.

5. Un système de filtration et de traitement d'eau (S), pour la purification et le traitement d'un flux d'eau (F) provenant du réseau de distribution d'eau (R), comprenant :
un premier filtre (F1) au charbon et argent,
un deuxième filtre (F2) en céramique et charbon actif situé en aval du premier filtre (F1) au charbon et argent,
et un dispositif de traitement (100) selon l'une quelconque des revendications précédentes, dans lequel le dispositif de traitement (100) est situé en aval du deuxième filtre (F2) en céramique et charbon actif et disposé verticalement avec la première tête (11) en haut et la deuxième tête (12), qui inclut la sortie d'eau (OUT), en bas.
